Europäisches Patentamt

European Patent Office

Office européen des brevets

(11) Veröffentlichungsnummer: **0 507 052 A1**

# (12) EUROPÄISCHE PATENTANMELDUNG

(21) Anmeldenummer: **92101581.4**

(22) Anmeldetag: **31.01.92**

(51) Int. Cl.$^5$: **G01T 1/00**

(30) Priorität: **28.03.91 DE 4110090**

(43) Veröffentlichungstag der Anmeldung:
**07.10.92 Patentblatt 92/41**

(84) Benannte Vertragsstaaten:
**AT BE CH DK ES FR GB GR IT LI LU NL PT SE**

(71) Anmelder: **MIKROELEKTRONIK UND
TECHNOLOGIE GESELLSCHAFT mbH
Grenzstrasse 28, PF 34
O-8080 Dresden(DE)**

(72) Erfinder: **Junghans, Bernd, Prof. Dr.
Strasse der Befreiung 2
O-8060 Dresden(DE)**
Erfinder: **Hübler, Peter
Leutewitzer Ring 70
O-8038 Dresden(DE)**
Erfinder: **Streil, Thomas, Dr.
Helbigsdorfer Weg 20
O-8038 Dresden(DE)**
Erfinder: **Kelm, Georg, Dr.
Alexander-Herzen-Strasse 32
O-8080 Dresden(DE)**
Erfinder: **Sauer, Bodo
Lange Strasse 41**

**O-8028 Dresden(DE)**
Erfinder: **Scade, Andreas, Dipl.-Phys.
Schützenhofstrasse 6
O-8023 Dresden(DE)**
Erfinder: **Raab, Michael
Mittlere Bergstrasse 57
O-8122 Radebeul(DE)**
Erfinder: **Mach, Wolfgang
Leutewitzer Strasse 23
O-8010 Dresden(DE)**
Erfinder: **Jähne, Rolf
Rostocker Strasse 13
O-8080 Dresden(DE)**
Erfinder: **Kluge, Wolfram
Alexander-Herzen-Strasse 30
O-8080 Dresden(DE)**
Erfinder: **Lippmann, Frank, Dr.
Liebigstrasse 22
O-8027 Dresden(DE)**
Erfinder: **Ullmann, Werner, Dr.
Helmholtzstrasse 32
O-1160 Berlin(DE)**
Erfinder: **Feddersen, Christian, Dr.
K.-Polcern-Strasse 14
O-1162 Berlin(DE)**

(54) **Kontaminationsdosimeter mit Radiation-RAM für Alpha-Strahlen.**

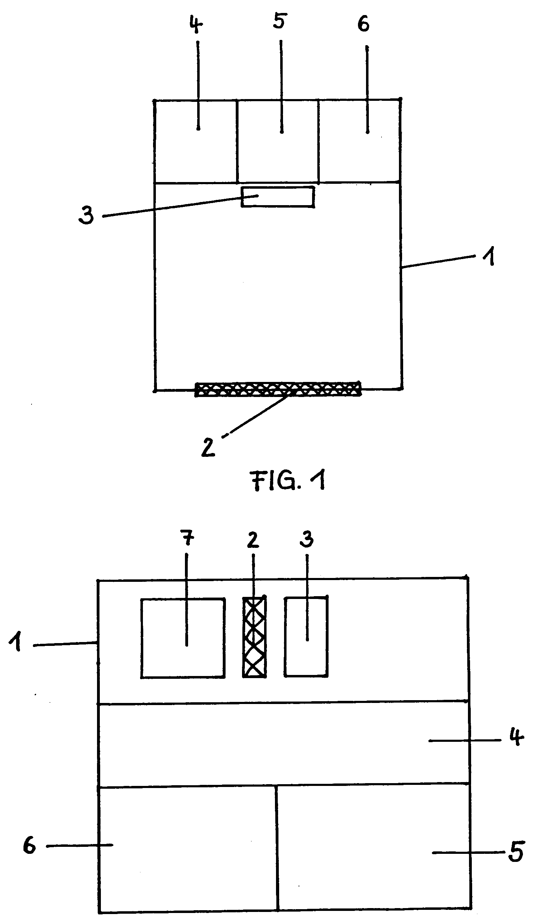

(57) Die Erfindung löst die Aufgabe, ein Kontaminationsdosimeter mit Radiation - RAM für Alpha-Strahlen zu schaffen, mit dem eine hohe Nachweisempfindlichkeit bei geringem Rauschen, bei Ausführung als großflächiger Sensor, einfacher read out electronic und ausschließlicher Alpha-Strahlungsaktivität unter dem Aspekt eines geringstmöglichen Aufwandes erreicht wird. Zur Anwendung kommt eine Dosimeter-Einrichtung (gem. Fig. 1), in der erfindungsgemäß mindestens ein planares dRAM-Bauelement (3) mit einer Struktur < 3 um und einer wahlweisen Verringerung der Plattenspannung $U_{PL}$, der 2L- 60keV- Borimplantationen, der I- 140keV- Borimplantation und der I-As-Implantation und erhöhtem Wert für die Gateoxiddicke in der Dosimeter-Einrichtung (1) angeordnet ist.
Die Erfindung wird überall dort eingesetzt, wo Alpha-Strahlen vermutet beziehungsweise Alpha-Strahlungsaktivitäten festgestellt werden.

EP 0 507 052 A1

FIG. 1

Die Erfindung betrifft ein Kontaminationsdosimeter mit Radiation - RAM für alpha-Strahlen. Es kommt überall dort zu Einsatz, wo Alpha-Strahlen vermutet beziehungsweise Alpha-Strahlungsaktivitäten festgestellt werden. Diese Kontaminationsdosimeter erreichen damit umweltspezifische Bedeutung für eine große Anzahl von Wirtschaftszweigen.

Für die Dosimetrie von Kontaminationen mit radioaktiver Strahlung wird bekanntermaßen neben Ionisationskammern, Kernspurdetektoren unter anderem auch die Ladungsänderung in kapazitiven Halbleiterdioden genutzt.

Diese Dosimeter gestatten keinen getrennten Nachweis von beispielsweise alpha- und beta- Strahlung. Das bei Halbleiterdetektoren relativ hohe Rauschen erlaubt eine hohe Nachweisempfindlichkeit nur mit hohem schaltungstechnischem Aufwand. Die für umfassende Kontaminationsdosimetrie erforderlichen großflächigen Sensorgebilde sind kompliziert herzustellen. Eine komplizierte read out electronic, die fehlende Möglichkeit der Ereignisspeicherung und hohe Kosten verhindern einen breiten Einsatz.

In der DE-OS 3049153 ist eine Meßzelle zur Bestimmung der Staubdichte in Gasen beschrieben. Dabei wird die Schwächung der Alpha-Strahlung einer Alpha-Strahlenquelle bei Anwesenheit von Staub über die Änderung des bit-Inhaltes der d-RAM-Zelle eines dieser Alpha-Strahlung ausgesetzten 16K dRAM-Bauelementes gemessen. Aufgrund des Erfordernisses einer relativ starken Alpha-Strahlungsquelle kann eine solche Anordnung für die Detektion und Dosimetrie geringer Kontaminationen beziehungsweise geringer Alpha-Strahlenaktivität nicht eingesetzt werden.

Der Erfindung liegt die Aufgabe zugrunde, ein Kontaminationsdosimeter mit Radiation - RAM für Alpha-Strahlen zu schaffen, mit dem eine hohe Nachweisempfindlichkeit bei geringem Rauschen, bei Ausführung als großflächiger Sensor, einfacher read out electronic und ausschließlicher Alpha-Strahlungsaktivität unter dem Aspekt eines geringstmöglichen Aufwandes erreicht wird.

Erfindungsgemäß wird die Aufgabe mit einer an sich bekannten Dosimeter-Einrichtung dadurch gelöst, daß mindestens ein planares d-RAM-Bauelement mit einer Struktur < 3 um und einer wahlweisen Verringerung der Plattenspannung $U_{PL}$, der 2L-60keV- Borimplantationen, der I- 140keV- Borimplantation und der I-As-Implantation und erhöhtem Wert für die Gateoxiddicke in der Dosimeter-Einrichtung angeordnet ist.

Vorteilhafte Ausgestaltungen der Erfindung ergeben sich aus der variablen Dimmensionierung des d-RAM-Bauelementes, wobei in überraschender Weise mit optimaler Auswahl der Kenngrößen bei etwa 3 um - Strukturen als 64 kdRAM Empfindlichkeiten bis zu 5 %, bei etwa 2 um - Strukturen als 256 kdRAM bis zu 70 % und bei etwa 1,2 um - Strukturen als 1 MdRAM bis zu 100 % unter Erfüllung der aufgabengemäßen Randbedingungen erreicht werden. Die relative Empfindlichkeit von 100 % gründet sich auf eine bekannte Meßanordnung, bei der eine Sensorfläche in einem Abstand von 1 cm zur Kollimatorkanalöffnung von 20° einem extern ermittelten Impuls von 1 $s^{-1}$ einer Am-241-Alpha-Strahlungsquelle ausgesetzt ist.

Ein 64 kdRAM-Bauelement hat üblicherweise eine Gateoxiddicke von 40 nm, keine B-Implantationen und keine I-As-Implantation bei einer $U_{PL}$ von 5 V und 7 V. Bei einer Plattenspannung $U_{PL}$ von 0 V ist eine 100-keV I-As-Implantation von $1*10^{17}$ As-Atome$*$cm$^{-2}$ erforderlich.

Ausgehend von der BE-Variante mit einer ursprünglichen $U_{PL}$ von 7 V werden auch bei Variation aller Parameter keine funktionsfähigen Sensorelemente erhalten.

Für die Bauelemente-Variante mit einer ursprünglichen $U_{PL}$ von 5 V wird die $U_{PL}$ auf 3,5 V bis 4 V abgesenkt und die Gateoxiddicke auf 50 nm bis 120 nm erhöht. Dabei wird eine Empfindlichkeit bis 45 % erreicht.

Eine B-Implantation von $1*10^{11}$ bis $2*10^{11}$ B-Atome$*$cm$^{-2}$ bei 140 keV steigert die Empfindlichkeit bis um weitere 5 %.

Für die Bauelemente-Variante mit einer ursprünglichen $U_{PL}$ von 0 V wird unter Beibehalt der $U_{PL}$ von 0 V, der I-As-Implantation von $1*10^{17}$ As-Atome$*$cm$^{-2}$, durch Erhöhung der Gateoxiddicke auf 50 bis 120 nm und durch 60 keV B-Implantation von $1*10^{11}$ bis $1*10^{12}*$cm$^{-2}$ eine Empfindlichkeit bis 40 % erreicht.

Eine B-Implantation von $1*10^{11}$ B-Atome$*$cm$^{-2}$ bis $2*10^{11}$ B-Atome$*$cm$^{-2}$ bei 140 keV steigert die Empfindlichkeit um bis weitere 5 %. Bei Wegfall der 60 keV-B-Implantation wird eine Empfindlichkeit bis 35% erreicht.

Ein 256 kdRAM-Bauelement hat üblicherweise eine Gateoxiddicke von 20 nm bis 25 nm, zwei B-Implantationen von jeweils $3*10^{12}$ B-Atome$*$cm$^{-2}$ bei 60 keV (2L-Implantation) und 140 keV (I-Implantation) sowie eine 100 keV I-As-Implantation von etwa $1*10^{14}$ As-Atome$*$cm$^{-2}$ bei einer $U_{PL}$ von 2,5 V oder keine I-As-Implantation bei einer $U_{PL}$ von 5 V.

Für die Bauelemente-Variante mit einer ursprünglichen $U_{PL}$ von 2,5 V wird die $U_{PL}$ und die I-As-Implantation bei den ursprünglichen Werten belassen, die B-Implantation bei 140 keV weglassen, die 60 keV B-Implantation auf $1*10^{11}$ bis $5*10^{11}$cm$^{-2}$ abgesenkt und die Gateoxiddicke auf 30 nm bis 80 nm erhöht.

Dabei wird eine Empfindlichkeit bis zu 65 % erreicht. Eine B-Implantation bei 140 keV von $1*10^{11}*$cm$^{-2}$ bis $2*10^{11}*$cm$^{-2}$ erhöht die Empfindlichkeit bis um weitere 5 %. Bei weiterer Verminderung der 60 keV B-Implantation wird die Empfindlichkeit auf 50 % abgesenkt.

Für die Bauelemente-Variante mit einer ursprünglichen $U_{PL}$ von 5 V wird die $U_{PL}$ auf den Bereich von 2,8 v bis 3,5 V, die 60 keV-B-Implantation auf $1*10^{11}*cm^{-2}$ bis $5*10^{11}*cm^{-2}$ abgesenkt, die 140 keV-B-Implantation weggelassen und die Gateoxiddicke auf 30 nm bis 80 nm erhöht. Eine Empfindlichkeit bis zu 65 % wird erreicht. Eine B-Implantation bei 140 keV von $1*10^{11}*cm^{-2}$ bis $2*10^{11}*cm^{-2}$ erhöht die Empfindlichkeit um bis weitere 5%.

Ein 1 MdRAM-Bauelement hat üblicherweise eine Gateoxiddicke von 8 nm bis 12 nm, zwei B-Implantationen von jeweils $3*10^{12}*cm^{-2}$ bei 60 keV und 140 keV sowie eine 100 keV I-As-Implantation von $1*10^{17}$ As-Atome$*cm^{-2}$ für $U_{PL}$ von 3,2 V bis 3,5 V.

Für diese Bauelemente-Variante mit einer ursprünglichen $U_{PL}$ von 3,2 V in bis 3,5 V werden die $U_{PL}$ auf 2,7 V bis 2,9 V, die I-As-Implantation auf $1*10^{14}$ As-Atome$*cm^{-2}$ bis Null, die 60 keV - B-Implantation auf $1*10^{11}$ bis $5*10^{11}$ B-Atome$*cm^{-2}$ abgesenkt, die 160 keV B-Implantation weggelassen und die Gateoxiddicke auf 20 nm bis 50 nm erhöht. Eine Empfindlichkeit von 95 % bis 100 % wird erreicht.

Eine 140 keV B-Implantation von $1*10^{11}*cm^{-2}$ bis $2*10^{11}*cm^{-2}$ erhöht die Empfindlichkeit auf 100 %. Bei weiterer Verminderung der 60 keV-B-Implantation wird die Empfindlichkeit auf 90 % abgesenkt.

Ein Optimum wird bei einer $U_{PL}$ von 2,70 V bis 2,75 V und einer 100 keV I-As-Implantation von $1*10^{14}$ bis $1*10^{13}$ As-Atome$*cm^{-2}$ erreicht.

Weitere Untersuchungen haben ergeben, daß bei den 2 um- und insbesondere bei den 1,2 um Zellstrukturen unter Beibehalt der ursprünglichen Gateoxiddicken und einer auf $1*10^{11}$ B-Atome$*cm^{-2}$ bis $5*10^{11}$ B-Atome $*cm^{-2}$ abgesenkten 60 keV-B-Implantation sowie durch Weglassen der B-Implantation von 140 keV und I-As-Implantation die erfindungsgemäßen Wirkungen gleichfalls erhalten werden. Bei weiterer Verminderung der 60 keV-B-Implantation werden die Empfindlichkeiten auf 40 bzw. 85 % abgesenkt.

Die Einstellung der $U_{PL}$ innerhalb der angegebenen Bereiche ist jedoch enger toleriert.

Die aufgeführten Bauelemente-Varianten können sowohl für die Detektion als auch für die Dosimetrie von Alpha-Strahlen beziehungsweise alpha-strahlenden Kontaminationen in bekannten Dosimetern eingesetzt werden. Durch die hohe Anzahl getrennt erfaßbarer Zellen kann anstelle der sonst erforderlichen hohen Verstärkung mit ihren bekannten Nachteilen ein ausschließlich die Digitaltechnik nutzende Meßwerterfassung eingesetzt werden.

Zur Ausgestaltung ausschließlich als Radondosimeter muß gewährleistet sein, daß ausschließlich Radon Zugang zur Meßkammer hat. Diese Forderung wird in bekannter Weise durch das beispielsweise in der DE-OS 2926491 beschriebene passive Dosimeter mit Aerosolfilter erfüllt. Hierbei wird davon ausgegangen, daß Radon das einzige alphastrahlende Gas ist.

Die Erfindung sei nunmehr in einem Ausführungsbeispiel anhand zweier Zeichnungen erläutert. Dabei zeigen:

Fig. 1    eine Meßkammer zur Messung der Aktivitätskonzentration des Edelgases Radon

Fig. 2    eine Einrichtung zur Messung der potentiellen Alphaenergie- Konzentration, der Aktivitätskonzentration kurzlebiger Radonfolgeprodukte sowie zur Erfassung der Stahlungsexposition durch kurzlebige Radonfolgeprodukte

In Fig. 1 ist ein Gehäuse 1 dargestellt, an dessen einer Begrenzungsfläche ein Aerosolfilter 2 angeordnet ist, so daß ausschließlich Radon Zugang zur Meßkammer hat. Innerhalb des Gehäuses 1 befinden sich ein oder mehrere erfindungsgemäße dRAM-Bauelemente 3 mit integrierter Auswerteelektronik. Außerhalb der Kammer , jedoch in elektrischer Verbindung zu den dRAM-Bauelementen 3, befinden sich ein Display 4 zur Anzeige der Aktivitätskonzentration von Radon, eine entsprechende Schnittstelle 5 zur Datenausgabe sowie die Stromversorgung 6, ausgeführt als Batterie oder Netzteil mit Stützbatterie.

Fig. 2 zeigt eine weitere Ausgestaltung der Variante gem. Fig. 1, bei der im Gehäuse 1 eine Saugeinrichtung 7 angeordnet ist. Diese saugt Meßluft durch den Aerosolfilter 2 an. Gegenüber dem Aerosolfilter 2 befinden sich ein oder mehrere erfindungsgemäße dRAM-Bauelemente 3 mit integrierter Auswerteelektronik. Das Gehäuse 1 beinhaltet außerdem das Display 4 zur Anzeige der Meßwerte, eine entsprechende Schnittstelle 5 zur Datenausgabe sowie die Stromversorgung 6.

**Patentansprüche**

1.  Kontaminations-Dosimeter mit Radiation-RAM für Alpha-Strahlen unter Verwendung einer Dosimeter-Einrichtung, dadurch gekennzeichnet, daß mindestens ein planares dRAM-Bauelement (3) mit einer Struktur < 3 um und einer wahlweisen Verringerung der Plattenspannung $U_{PL}$, der 2L- 60keV- Borimplantationen, der I- 140keV- Borimplantation und der I-As-Implantation und erhöhtem Wert für die Gateoxiddicke in der Dosimeter-Einrichtung (1) angeordnet ist.

2.  Kontaminationsdosimeter nach Anspruch 1, dadurch gekennzeichnet, daß mindestens ein planares dRAM-Bauelemente (3) mit einer Struktur von etwa 3 um mit einer $U_{PL}$ von 0 V , mit einer I-As-Implantation in der Größenordnung von $10^{17}$ As-Atome$*$cm$^{-2}$ und mit einer erhöhten Gateoxiddicke im Bereich von 50 nm bis 120 nm in der Dosimeter-Einrichtung (1) angeordnet ist.

3. Kontaminationsdosimeter nach Anspruch 2, dadurch gekennzeichnet, daß mindestens ein planares dRAM-Bauelement (3) mit einer Struktur von etwa 3 um mit einer $U_{PL}$ von 0 V, mit einer I-As-Implantation in der Größenordnung von $10^{17}$ As-Atome$*$cm$^{-2}$, mit einer erhöhten Gateoxiddicke im Bereich von 50 nm bis 120 nm und mit einer 140 keV-B-Ionenimplantation von $1*10^{11}*$cm$^{-2}$ bis $2*10^{11}*$cm$^{-2}$ in der Dosimeter-Einrichtung (1) angeordnet ist.

4. Kontaminationsdosimeter nach Anspruch 2, dadurch gekennzeichnet, daß mindestens ein planares dRAM-Bauelement (3) mit einer Struktur von etwa 3 um mit einer $U_{PL}$ von 0 V, mit einer I-As-Implantation von $10^{17}$ As-Atome$*$cm$^{-2}$, mit einer Gateoxiddicke im Bereich von 50 nm bis 120 nm und mit einer 60 keV-B-Ionenimplantation von $1*10^{11}*$cm$^{-2}$ bis $2*10^{11}*$cm$^{-2}$ in der Dosimeter-Einrichtung (1) angeordnet ist.

5. Kontaminationsdosimeter nach Anspruch 1, dadurch gekennzeichnet, daß mindestens ein planares dRAM-Bauelement (3) mit einer Struktur von etwa 3 um mit einer $U_{PL}$ von 3,5 V bis 4 V und mit einer Gateoxiddicke von 50 nm bis 120 nm in der Dosimeter-Einrichtung (1) angeordnet ist.

6. Kontaminationsdosimeter nach Anspruch 5, dadurch gekennzeichnet, daß mindestens ein planares dRAM-Bauelement (3) mit einer Struktur von etwa 3 um mit einer $U_{PL}$ von 3,5 V bis 4 V, mit einer Gateoxiddicke von 50 nm bis 120 nm und mit einer 140 keV-B-Implantation von $1*10^{11}*$cm$^{-2}$ bis $2*10^{11}*$cm$^{-2}$ in der Dosimeter-Einrichtung (1) angeordnet ist.

7. Kontaminationsdosimeter nach Anspruch 1, dadurch gekennzeichnet, daß mindestens ein planares dRAM-Bauelement (3) mit einer Struktur von etwa 2 um mit einer $U_{PL}$ von 2,5 V, mit einer Gateoxiddicke von 30 nm bis 80 nm und mit einer I-Implantation maximal von $10^{14}$ As-Atome$*$cm$^{-2}$ in der Dosimeter-Einrichtung (1) angeordnet ist.

8. Kontaminationsdosimeter nach Anspruch 7, dadurch gekennzeichnet, daß mindestens ein planares dRAM-Bauelement (3) mit einer Struktur von etwa 2 um mit einer $U_{PL}$ von 2,5 V bis 2,8 V, mit einer Gateoxiddicke von 30 nm bis 80 nm, mit einer I-Implantation maximal von $10^{14}$ As-Atome$*$cm$^{-2}$ und mit einer 140keV B-Implantation von $1*10^{11}*$cm$^{-2}$ bis $2*10^{11}*$cm$^{-2}$ in der Dosimeter-Einrichtung (1) angeordnet ist.

9. Kontaminationsdosimeter nach Anspruch 7, dadurch gekennzeichnet, daß mindestens ein planares dRAM-Bauelement (3) mit einer Struktur von etwa 2 um mit einer $U_{PL}$ von 2,5 V bis 2,8 V, mit einer Gateoxiddicke von 30 nm bis 80 nm, mit einer I-Implantation maximal von $10^{14}$ As-Atome$*$cm$^{-2}$ und mit einer 60 keV-B-Implantation von $1*10^{11}*$cm$^{-2}$ bis $5*10^{11}*$cm$^{-2}$ in der Dosimeter-Einrichtung (1) angeordnet ist.

10. Kontaminationsdosimeter nach Anspruch 1, dadurch gekennzeichnet, daß mindestens ein planares dRAM-Bauelement (3) mit einer Struktur von etwa 2 um mit einer $U_{PL}$ von 2,8 V bis 3,5 V und mit einer Gateoxiddicke von 30nm bis 80 nm in der Dosimeter-Einrichtung (1) angeordnet ist.

11. Kontaminationsdosimeter nach Anspruch 10, dadurch gekennzeichnet, daß mindestens ein planares dRAM-Bauelement (3) mit einer Struktur von etwa 2 um mit einer $U_{PL}$ von 2,8 V bis 3,5 V, mit einer Gateoxiddicke von 30 nm bis 80 nm, und mit einer 60 keV-B-Implantation von $1*10^{11}*$cm$^{-2}$ bis $5*10^{11}*$cm$^{-2}$ in der Dosimeter-Einrichtung (1) angeordnet ist.

12. Kontaminationsdosimeter nach Anspruch 10, dadurch gekennzeichnet, daß mindestens ein planares dRAM-Bauelement (3) mit einer Struktur von etwa 2 um mit einer $U_{PL}$ von 2,8 V bis 3,5 V, mit einer Gateoxiddicke von 30 nm bis 80 nm, und mit einer 140 keV-B-Implantation von $1*10^{11}*$cm$^{-2}$ bis $2*10^{11}*$cm$^{-2}$ in der Dosimeter-Einrichtung (1) angeordnet ist.

13. Kontaminationsdosimeter nach Anspruch 11, dadurch gekennzeichnet, daß mindestens ein planares dRAM-Bauelement (3) mit einer Struktur von etwa 2 um mit einer $U_{PL}$ von 2,8 V bis 3,5 V, mit einer Gateoxiddicke von 30 nm bis 80 nm, mit einer 60 keV-B-Implantation von $1*10^{11}*$cm$^{-2}$ bis $5*10^{11}*$cm$^{-2}$ und mit einer 140 keV-B-Implantation von $1*10^{11}$ bis $2*10^{11}$cm$^{-2}$ in der Dosimeter-Einrichtung (1) angeordnet ist.

14. Kontaminationsdosimeter nach Anspruch 1, dadurch gekennzeichnet, daß mindestens ein planares dRAM-Bauelement (3) mit einer Struktur von etwa 1,2 um mit einer $U_{PL}$ von 2,7 V bis 2,9 V, mit einer 100 keV-I-As-Implantation bis maximal $1*10^{14}*cm^{-2}$ und mit einer Gateoxiddicke von 20 nm bis 50 nm in der Dosimeter-Einrichtung (1) angeordnet ist.

15. Kontaminationsdosimeter nach Anspruch 14, dadurch gekennzeichnet, daß mindestens ein planares dRAM-Bauelement (3) mit einer Struktur von etwa 1,2 um mit einer $U_{PL}$ von 2,7 V bis 2,9 V, mit einer 100 keV-I-As-Implantation bis maximal $1*10^{14}*cm^{-2}$, mit einer Gateoxiddicke von 20 nm bis 50 nm und mit einer 60 keV-B-Implantation von $1*10^{11}$ bis $5*10^{11}cm^{-2}$ in der Dosimeter-Einrichtung (1) angeordnet ist.

16. Kontaminationsdosimeter nach Anspruch 14, dadurch gekennzeichnet, daß mindestens ein planares dRAM-Bauelement (3) mit einer Struktur von etwa 1,2 um mit einer $U_{PL}$ von 2,7 V bis 2,9 V, mit einer 100 keV-I-As-Implantation bis maximal $1*10^{14}*cm^{-2}$, mit einer Gateoxiddicke von 20 nm bis 50 nm und mit einer 140 keV-B-Implantation von $1*10^{11}$ bis $5*10^{11}cm^{-2}$ in der Dosimeter-Einrichtung (1) angeordnet ist.

17. Kontaminationsdosimeter nach Anspruch 15, dadurch gekennzeichnet, daß mindestens ein planares dRAM-Bauelement (3) mit einer Struktur von etwa 1,2 um mit einer $U_{PL}$ von 2,7 V bis 2,9 V, mit einer 100 keV-I-As-Implantation bis maximal $1*10^{14}*cm^{-2}$, mit einer Gateoxiddicke von 20 nm bis 50 nm und mit einer 60 keV-B-Implantation von $1*10^{11}$ bis $5*10^{11}cm^{-2}$ und einer 140 keV-B-Implantation von $1*10^{11}$ bis $2*10^{11}cm^{-2}$ in der Dosimeter-Einrichtung (1) angeordnet ist.

FIG. 1

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| Y | PATENT ABSTRACTS OF JAPAN vol. 12, no. 284 (P-740)4. August 1988 & JP-A-63 061 983 ( NEC CORP. ) 18. März 1988 * Zusammenfassung * --- | 1 | G01T1/00 |
| Y | IEEE TRANSACTIONS ON ELECTRON DEVICES. Bd. 37, Nr. 3, März 1990, NEW YORK US Seiten 804 - 806; J.W. PABST ET AL.: 'Ion-Implanted p-n Junction Capacitors for Ga-As DRAM's' * das ganze Dokument * --- | 1 | |
| A | US-A-4 983 843 (IAN THOMSON) * das ganze Dokument * --- | 1 | |
| A | US-A-4 413 401 (T. KLEIN ET AL.) * Zusammenfassung * --- | 1 | |
| A | IEEE TRANSACTIONS ON ELECTRON DEVICES. Bd. 36, Nr. 9-I, September 1989, NEW YORK US Seiten 1644 - 1650; KAN TAKEUCHI ET AL.: 'Alpha-particle-induced charge collection measurements for Megabit DRAM cell' * das ganze Dokument * --- | 1 | **RECHERCHIERTE SACHGEBIETE (Int. Cl.5 )** G01T H01L |
| A,D | DE-A-3 049 153 (ING. W. HENGST GMBH & CO KG) * das ganze Dokument * --- | 1 | |
| A,D | DE-A-2 926 491 (KERNFORSCHUNGSZENTRUM KARLSRUHE GMBH) * das ganze Dokument * ----- | 1 | |

Der vorliegende Recherchenbericht wurde für alle Patentansprüche erstellt

| Recherchenort | Abschlußdatum der Recherche | Prüfer |
|---|---|---|
| DEN HAAG | 28 JULI 1992 | BAROCCI S. |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus andern Gründen angeführtes Dokument
................................................................
& : Mitglied der gleichen Patentfamilie, übereinstimmendes
    Dokument

EPO FORM 1503 03.82 (P0403)